Europäisches Patentamt

European Patent Office

Office européen des brevets

(11) Veröffentlichungsnummer : **0 083 794**
B1

(12) **EUROPÄISCHE PATENTSCHRIFT**

(45) Veröffentlichungstag der Patentschrift :
17.07.85

(21) Anmeldenummer : 82112030.0

(22) Anmeldetag : 27.12.82

(51) Int. Cl.⁴ : **C 09 K   3/10, C 04 B  28/00**

(54) **Fugendichtmasse.**

(30) Priorität : 04.01.82 AT 3/82

(43) Veröffentlichungstag der Anmeldung :
20.07.83 Patentblatt 83/29

(45) Bekanntmachung des Hinweises auf die Patenterteilung : 17.07.85 Patentblatt 85/29

(84) Benannte Vertragsstaaten :
BE CH DE FR GB IT LI NL SE

(56) Entgegenhaltungen :
AT-B-  318 112

(73) Patentinhaber : Henkel Kommanditgesellschaft auf
Aktien
Postfach 1100 Henkelstrasse 67
D-4000 Düsseldorf-Holthausen (DE)

(72) Erfinder : Hartschen, Hans-Peter
Rott 151
D-4150 Krefeld (DE)
Erfinder : Loth, Helmut
Rüttenscheider Strasse 183
D-4300 Essen 1 (DE)

**Beschreibung**

Die vorliegende Erfindung betrifft eine Fugendichtmasse auf Basis von wäßrigen Dispersionen von Copolymerisaten aus Vinylestern, Acrylestern, Butadien, Styrol, Acrylnitril und gegebenenfalls weiteren copolymerisierbaren Monomeren.

Fugendichtmassen auf Basis von Dispersionen aus Polyacrylestern, Polyisoprenen, Polybutadienstyrol oder Polybutadienacrylnitril, die auch erhebliche Mengen an anorganischen Füllstoffen enthalten, sind seit längerem bekannt.

Auch ist es bekannt, wäßrige Dispersionen aus Polymerisaten von Vinylestern, Acrylestern und dergleichen, die einpolymerisierte Silanolgruppen enthalten, zur Herstellung von Bautenbeschichtungsmitteln sowie als Klebmittel zu verwenden (AT-PS 318 112). Durch den Einbau der Silanolgruppen in die Polymerisate wird eine verbesserte Haftung auf den verschiedensten Oberflächen, beispielsweise auf Beton, Putz, Zement, Asbest, Glas, Metallen und dergleichen erzielt.

Von Fugendichtmassen erwartet man neben einer guten Haftung auf den verschiedensten Materialien auch eine gute innere Festigkeit, die sich in verbesserten Werten für die Bruchdehnung und Spannung äußert.

Aufgabe der vorliegenden Erfindung war es, solche Fugendichtmassen zu entwickeln, die auch ohne Voranstriche eine gute Haftung auf saugenden wie nichtsaugenden Untergrund haben und darüber hinaus in der Lage sind, auf sie einwirkende Kräfte ohne Bruch zu überstehen, soweit die Belastung in dem bei Fugendichtmassen üblichen Bereich liegt.

Die erfindungsgemäße Aufgabe wird nun gelöst durch wäßrige Dispersionen von Copolymerisaten auf Basis von Vinylestern, Vinylchlorid, Acrylestern, Butadien, Styrol, Acrylnitril und gegebenenfalls weiteren copolymerisierbaren Monomeren und ist dadurch gekennzeichnet, daß solche Polymerisate, die Silanolgruppen enthalten, mit 20 bis 120 Gew.-%, bezogen auf festes Polymerisat, an Chlorparaffinen mit einer Kohlenstoffzahl von 8-28 Kohlenstoffatomen, die zwischen 40 und 70 Gew.-% Chlor enthalten, kombiniert werden. Neben diesem wesentlichen Bestandteil sollten die Fugendichtmassen in einer bevorzugten Ausführungsform noch anorganische Füllstoffe und/oder Pigmente in einer Menge von 1 bis 5 Gewichtsteilen auf 1 Gewichtsteil des Silanolgruppen tragenden Polymerisats enthalten.

Die erfindungsgemäß zu verwendenden Silanolgruppen enthaltenden Copolymerisate bzw. deren Dispersionen sind bekannt und wurden schon für die verschiedensten Zwecke unter anderem als Klebstoff bzw. als Grundlage für Bautenbeschichtungsmittel eingesetzt. Derartige Dispersionen zeigen eine gute Naßhaftung und haben eine gute mechanische Widerstandskraft. Ihre Herstellung erfolgt in bekannter Weise durch Polymerisation der genannten Monomeren, also etwa Vinylacetat, Vinylchlorid, Vinylidenchlorid, Vinylpropionat, Vinyllaurat, Ethylen, Acrylsäureester wie Acrylsäurebutylester, Butadien, Styrol, Acrylnitril und dergleichen in Gegenwart von Alkoxyvinylsilanen. Dabei hydrolysiert die Alkoxysilangruppierung zu den entsprechenden Silanolen. Verwendung und Herstellung der Dispersionen sind beschrieben in der DE-AS 21 48 457.

Es muß als überraschend angesehen werden, daß sich in derartige Dispersionen relativ große Mengen an Chlorparaffinen einarbeiten lassen, wobei nicht nur die Haftung verbessert wird, sondern auch eine erhebliche Steigerung der Bruchfestigkeit der Fuge, verglichen mit anderen für diesen Zweck eingesetzten Dispersionen eintritt. Die Chlorparaffine sind ebenfalls bekannte Verbindungen und werden als Weichmacher für die verschiedensten Polymerisate verwendet. Sie leiten sich ab von Kohlenwasserstoffen mit einer Kohlenstoffzahl von etwa 8 bis 28 Kohlenstoffatomen und können auch verzweigte Paraffine im Grundgerüst enthalten. Meist liegen sie vor als Gemische von $C_{10}$ bis $C_{13}$ oder $C_{14}$ bis $C_{17}$ oder $C_{20}$ bis $C_{28}$-Skeletten.

Sie sind weitgehend chloriert und weisen einen Chlorgehalt auf, der zwischen 40 und 70 % liegen kann, vorzugsweise aber zwischen 48 bis 64 % beträgt. Mit anderen bekannten Weichmachern wie Dioctylphthalat, Didecyladipat oder dem Alkylsulfonsäureester von Phenol/Kresol kann man die gewünschten Ergebnisse nicht erhalten.

Bei den nach der bevorzugten Ausführungsform einsetzbaren Füllstoffen und/oder Pigmenten handelt es sich um Calciumcarbonat, Talkum, Bariumsulfat, Leichtspat, Kaolin, gemahlenem Dolomit, Schiefermehl oder Quarzsand, insbesondere feiner Körnung. Auch können für diesen Zweck verwendet werden Pigmente wie Titandioxid, Eisenoxid, Zinkweiß oder dergleichen.

Die Herstellung der Dispersionen erfolgt durch Mischen in geeigneten Mischaggregaten, gegebenenfalls unter Zusatz weiterer Hilfsmittel. Diese können oberflächenaktive Substanzen in einer Menge von 0,01 bis 0,5 %, bezogen auf den Feststoffgehalt des Polymerisats und des Chlorparaffins, sein. Als oberflächenaktive Substanzen sind nichtionogene Netzmittel bevorzugt. Es handelt sich hier in erster Linie um Addukte von Ethylenoxid (5 bis 20 Mol) an Alkanole bzw. Alkandiol mit 12 bis 18 Kohlenstoffatomen oder Alkyl-($C_{6/9}$) phenol oder niedermolekularen Polypropylenoxiden.

Weiterhin ist es möglich, andere Hilfsstoffe wie wasserlösliche Celluloseether, Polyvinylalkohol, Polyacrylate oder auch Entschäumer, z. B. auf Basis von Silikonöl, zuzufügen.

Mit den erfindungsgemäßen Fugendichtmassen werden gute Haftwerte gefunden für die verschiedensten Bau- und Konstruktionsmaterialien, zum Beispiel auf Metallen wie Aluminium, Eisen bzw. Stahl und Zink, ferner auf Kunststoffen wie PVC oder auch Polycarbonaten oder Polymethacrylaten oder auch mineralischen Bauteilen aus Glas, Beton, Keramik, Asbestzement und emaillierten Metallteilen.

## 0 083 794

### Beispiele

Als Polymerdispersion wurde eine handelsübliche aus etwa 50 Gewichtsteilen Styrol und 50 Gewichtsteilen Acrylsäurebutylester hergestellte Dispersion eingesetzt, die etwa 1 Gewichtsprozent an Vinylsilanolgruppen enthielt. Als nichtionogenes Netzmittel diente ein Umsetzungsprodukt eines $C_{12}/C_{14}$-Glykols mit 10 Mol Ethylenoxid. Die Mischungen selbst wurden in einem Vakuumplaneten-Mischer hergestellt und die einzelnen Komponenten nacheinander zugegeben. Zuletzt wurde nach 15 Minuten bei evakuiertem Mischer gemischt, um Lufteinschlüsse zu beseitigen.

Nachfolgend sind die beiden eingesetzten Mischungen wiedergegeben.

### Beispiel 1

Es wurde ein Fugendichtungsmasse nach folgender Rezeptur hergestellt :

30,0 g Polymerisatdispersion (50 %ig)
16,5 g Chlorparaffin ($C_{10}$-$C_{13}$, 49 % Chlor)
 0,5 g nichtionogenes Netzmittel
43,0 g Schwerspat
 5,0 g Talkum
 5,0 g Titandioxid.

### Beispiel 2

30,0 g Polymerisatdispersion (50 %ig)
15,0 g Chlorparaffin ($C_{10}$-$C_{13}$, 63 % Chlor)
 0,5 g nichtionogenes Netzmittel
44,5 g Schwerspat
 5,0 g Talkum
 5,0 g Titanoxid.

### Vergleichsversuch

35,0 g 60 Gew.% Polyacrylesterdispersion (Gemisch aus Ethyl- und i-Octylester) 800 mPa.s bei 25 °C nach Epprecht
 7,0 g Polyisobutylen (handelsüblich)
42,0 g Kreide
 8,0 g Talkum
 6,0 g Titandioxid
 0,5 g nichtionogenes Netzmittel
 1,5 g Farbstoffe.

Es wurden aus Aluminium, Glas und PVC Prüfkörper angefertigt und gemäß DIN 52455 angefertigt und wie folgt geprüft :

Die Prüfkörper zunächst 3 Tage bei Normalklima gelagert, dann einer 3 tätigen Temperaturbelastung von 70 °C ausgesetzt und wiederum 1 Tag bei Normalklima gelagert.

In der nachfolgenden Tabelle ist wiedergegeben in Abhängigkeit vom Beispiel 1 bzw. Beispiel 2 die bei Aluminium, Glas und PVC gefundene Bruchdehnung bzw. Bruchspannung. (Messung nach DIN 52455). In der letzten Spalte sind die Vergleichswerte für Prüfkörper aus Aluminium und Glas wiedergegeben.

### Tabelle

| Bruchdehnung [%] | Beispiel 1 | Beispiel 2 | Vergleich |
|---|---|---|---|
| Al | 167 | 253 | 15 |
| Glas | 150 | 235 | 20 |
| PVC | 191 | 211 | — |
| Bruchspannung [N/cm²] | | | |
| Al | 8,7 | 18.1 | 13,0 |
| Glas | 7,6 | 17,2 | 17,3 |
| PVC | 8,6 | 17,2 | — |

3

**0 083 794**

### Patentansprüche

1. Fugendichtmasse auf Basis von wäßrigen Dispersionen von Copolymerisaten auf Basis von Vinylestern, Acrylestern, Butadien, Styrol, Acrylnitril und gegebenenfalls weiteren copolymerisierbaren Monomeren, dadurch gekennzeichnet, daß solche Polymerisate, die Silanolgruppen enthalten, mit 20 bis 120 Gewichtsprozent, bezogen auf festes Polymerisat, an Chlorparaffinen mit einer Kohlenstoffzahl von 8-28 Kohlenstoffatomen, die zwischen 40 und 70 Gewichtsprozent Chlor enthalten, kombiniert werden.

2. Fugendichtmasse nach Anspruch 1, dadurch gekennzeichnet, daß die Masse anorganische Füllstoffe und/oder Pigmente in einer Menge von 1 bis 5 Gewichtsteilen auf 1 Gewichtsteil des Silanolgruppen tragenden Polymerisats enthalten.

3. Verwendung der Fugendichtmassen nach Ansprüchen 1 und 2 zum Verbinden bzw. Abdichten von Materialien aus PVC mit Beton, Glas und/oder Emaille sowie Aluminium und/oder Zink mit Beton, Glas und/oder Emaille sowie Keramik mit Beton, Glas und/oder Emaille.

### Claims

1. A joint sealing compound based on aqueous dispersions of copolymers based on vinyl esters, acrylates, butadiene, styrene, acrylonitrile and, optionally, other copolymerizable monomers, characterized in that polymers containing silanol groups are combined with from 20 to 120 % by weight, based on solid polymer, of $C_8$-$C_{28}$-chloroparaffins containing from 40 to 70 % by weight of chlorine.

2. A joint sealing compound as claimed in claim 1, characterized in that it contains inorganic fillers and/or pigments in a quantity of from 1 to 5 parts by weight to 1 part by weight of the polymer containing silanol groups.

3. The use of the joint sealing compounds claimed in claims 1 and 2 for joining and sealing materials of PVC to concrete, glass and/or enamels ; aluminium and/or zinc to concrete, glass and/or enamels and ceramics to concrete, glass and/or enamels.

### Revendications

1. Masse d'étanchéisation de joints à base de dispersions aqueuses de copolymères à base d'esters vinyliques, d'esters acryliques, de butadiène, de styrène, d'acrylonitrile et éventuellement d'autres monomères copolymérisables, caractérisée en ce qu'on combine ces polymères, qui contiennent des groupes silanol, avec 20 à 120 % en poids, par rapport au polymère solide, de chloroparaffines ayant un nombre de carbone de 8 à 28 atomes de carbone et qui contiennent entre 40 et 70 % en poids de chlore.

2. Masse d'étanchéisation de joints selon la revendication 1, caractérisée en ce que la masse contient des matières de charge minérales et/ou des pigments en une quantité de 1 à 5 parties en poids par partie en poids du polymère porteur de groupes silanol.

3. Utilisation des masses d'étanchéisation de joints selon les revendications 1 et 2 pour le raccordement ou l'étanchéisation de matériaux en PVC avec du béton, du verre et/ou des émaux, ainsi que d'aluminium et/ou de zinc avec du béton, du verre et/ou des émaux, de même que de céramique avec du béton, du verre et/ou des émaux.